# EUROPÄISCHE PATENTANMELDUNG

(11) **EP 3 425 771 A1**
(43) Veröffentlichungstag der Anmeldung: **09.01.2019**
(21) Anmeldenummer: 17180018.8
(22) Anmeldetag: 06.07.2017
(51) Int. Cl.: H02K 1/18, H02K 5/04

(54) **STATOR-GEHÄUSE-EINHEIT FÜR EINE ELEKTRISCHE MASCHINE**

(71) Anmelder: Siemens Aktiengesellschaft, 80333 München (DE)
(72) Erfinder: Haun, Dominik, 97688 Bad Kissingen (DE); Kessler, Winfried, 97647 Hausen (DE)

(57) **Zusammenfassung**

Die Erfindung betrifft eine Stator-Gehäuse-Einheit für eine elektrische Maschine (10), wobei ein Stator (1) mit einem Gehäuse (3) verbunden ist. Auf wenigstens einer Teilfläche einer Kontaktfläche zwischen dem Stator (1) und dem Gehäuse (3) ist eine Gestaltabweichung zur Erhöhung eines Reibkoeffizienten zwischen Stator und Gehäuse ausgeführt. Erfindungsgemäß ist die Gestaltabweichung als eine Rändelung (4) mit vorzugsweise achsparallelen Riefen ausgeführt. Vorzugsweise sind 10% bis 30% der Kontaktfläche zwischen Stator (1) und Gehäuse (3) gerändelt. Die Erfindung betrifft zudem ein Verfahren zum Herstellen einer derartigen Stator-Gehäuse-Einheit für eine elektrische Maschine (10) sowie eine elektrische Maschine (10) mit einer erfindungsgemäßen Stator-Gehäuse-Einheit.

## Beschreibung

Die Erfindung betrifft eine Stator-Gehäuse-Einheit für eine elektrische Maschine, wobei ein Stator mit einem Gehäuse verbunden ist.

Um einen Stator einer elektrischen Maschine in einem dafür vorgesehenen Gehäuse zu befestigen, muss sichergestellt werden, dass ein von einem Rotor der elektrischen Maschine herrührendes Drehmoment vom Stator auf das Gehäuse übertragbar ist. Ein Drehen des Rotors wirkt sich prinzipiell auf den Stator aus, weshalb dieser, um ein Mitdrehen des Stators mit dem Rotor zu verhindern, kraftschlüssig mit dem Gehäuse verbunden sein muss.

Hierzu behandelt die Patentschrift DE102014221427A1 eine Vorrichtung zur Befestigung eines Stators in einem Gehäuse, mit einem Gehäuse und einem in dem Gehäuse angeordneten Stator, wobei das Gehäuse an seinem Umfang zumindest eine Einbuchtung zur Befestigung des Stators am Gehäuse aufweist. Am Umfang des Stators ist zumindest eine Nut vorgesehen, in die die Einbuchtung des Gehäuses hineinragt.

Um den Stator auf diese Weise im Gehäuse zu befestigen ist jedoch eine Wandstärkendicke des Gehäuses nötig, die eine kompakte Bauweise der elektrischen Maschine erschwert macht.

Diesen Nachteil hat auch ein anderes Verfahren nach dem Stand der Technik, bei welchem der Stator in das Gehäuse eingepresst wird. Hierbei sind hohe Einpresskräfte erforderlich. Daher muss die Wandstärkendicke des Gehäuses eine gewisse Dicke aufweisen, damit während des Einpressens keine Risse auftreten. Zudem können sich während des Einpressens metallische Späne lösen, die im ungünstigsten Fall zu einer Schädigung der elektrischen Maschine führen.

Wird der Stator in einem alternativen Verfahren in das Gehäuse geklebt, muss diese Klebung mittels Wärme verfestigt werden. Hierfür sind jedoch ein weiterer zeitraubender Arbeitsschritt sowie ein kostspieliger Ofen nötig.

In der Patentschrift WO2009077088A2 wird ein Verfahren zum Herstellen einer Stator-Gehäuse-Einheit für eine elektrische Maschine beschrieben, wobei ein Stator mit einem Gehäuse verbunden wird. Vor dem Verbinden wird wenigstens eine Teilfläche der gemeinsamen Kontaktflächen mit einem Lackmaterial beschichtet.

Der Erfindung liegt die Aufgabe zugrunde, eine elektrische Maschine kompakt und schnell zu bauen.

Die Lösung der Aufgabe gelingt durch eine Stator-Gehäuse-Einheit für eine elektrische Maschine, wobei ein Stator mit einem Gehäuse verbunden ist und wobei auf wenigstens einer Teilfläche einer Kontaktfläche zwischen dem Stator und dem Gehäuse eine Gestaltabweichung zur Erhöhung eines Reibkoeffizienten zwischen Stator und Gehäuse ausgeführt ist.

Zudem gelingt die Lösung der Aufgabe durch eine elektrische Maschine mit einer derartigen Stator-Gehäuse-Einheit.

Ferner wird die Aufgabe gelöst durch ein Verfahren zum Herstellen einer derartigen Stator-Gehäuse-Einheit für eine elektrische Maschine, wobei ein Stator mit einem Gehäuse verbunden wird und wobei vor einem Verbinden wenigstens eine Teilfläche einer Kontaktfläche zwischen Stator und Gehäuse mit einer Gestaltabweichung zur Erhöhung eines Reibkoeffizienten zwischen Stator und Gehäuse versehen wird.

Die Erfindung eignet sich besonders gut für elektrische Maschinen, insbesondere für Elektromotoren. Besonders Servomotoren, die oft in einer kompakten Bauweise gefertigt sein müssen, profitieren von einer erfindungsgemäßen Ausführung der Stator-Gehäuse-Einheit.

Vorteilhaft ist die Gestaltabweichung als eine Rändelung ausgeführt. Vorteilhaft ist die Teilfläche der Kontaktfläche zwischen Stator und Gehäuse auf einer zum Gehäuse zeigenden Oberfläche des Stators ausgeführt. Dies bietet den Vorteil, dass bei einem Zusammenfügen von Stator und Gehäuse eine eventuelle Verformung des Stators vermieden wird.

Rändelungen sind Gestaltabweichungen, die in einen vorzugsweise metallenen Gegenstand eingeprägt, gefräst und/oder gedrückt werden. Der metallene Gegenstand wird dadurch aufgeraut und somit griffiger. Rändelungen können bei umlaufenden Rotationskörpern auf einer Drehmaschine besonders gut eingeprägt werden.

Erfindungsgemäß eignet sich für die Rändelung eines Stators, der mit einem Gehäuse verbunden werden soll, ein Rändel mit achsparallelen Riefen, da ein Statorjoch des Stators vorzugsweise in axialer Richtung in das Gehäuse eingefügt wird. Besonders gut eigen sich ein Rändel nach DIN 82-RAA 0,5, also eine Rändelung mit achsparallelen Riefen und einer Teilung von 0,5 mm. Jedoch können auch andere Rändelarten eingesetzt werden.

Zudem sind auch andere Formen von Rauheit als Gestaltabweichung zur Erhöhung des Reibkoeffizienten zwischen Stator und Gehäuse möglich, die beispielsweise durch Ätzen oder Sandstrahlen hervorgerufen werden können.

Die Rändelung ermöglicht eine sowohl kraftschlüssige als auch formschlüssige Verbindung des Stators mit dem Gehäuse. Dadurch kann das vom Rotor auf den Stator wirkende Drehmoment auf das Gehäuse übertragen werden, sodass bei drehendem Rotor der Stator und das Gehäuse ruhen.

Erfindungsgemäß ist die Teilfläche an einem Ende des Stators ausgeführt, der an einen Lagerschild, insbesondere einen Lagerschild an einer B-Seite der elektrischen Maschine, grenzt. Dies bietet den Vorteil, dass bei einem Einfügen bzw. Pressen des Statorjochs in das Gehäuse nur wenig Kraft aufgebracht werden muss. Vorzugsweise ist genau eine mit einer Rändelung versehene Teilfläche an einem Ende des Stators ausgeführt, der an einen Lagerschild grenzt.

Vorteilhaft beträgt die Teilfläche, die erfindungsgemäß eine Gestaltabweichung zur Erhöhung eines Reibkoeffizienten aufweist, 10% bis 30% der Kontaktfläche und ist ringsum den Stator ausgeführt. Eine Rändelung der gesamten Kontaktfläche ist möglich. Da dies jedoch mehr Zeit in Anspruch nimmt als eine Rändelung der Teilfläche und hierbei beim Zusammenfügen von Stator und Gehäuse zudem mehr Kraft benötigt wird, ist eine Rändelung von nur 10% bis 30% der Kontaktfläche von Vorteil.

Die Rändelung der Teilfläche ermöglicht, dass mittels reduzierter Pressung das Gehäuse auf den Stator bzw. der Stator in das Gehäuse geschoben werden kann, um Stator und Gehäuse kraft- und formschlüssig zu verbinden. Ein benötigter Kraftaufwand ist verringert. Zudem lösen sich durch die reduzierte Pressung weniger oder sogar keine metallischen Späne, weshalb die Gefahr einer Schädigung der elektrischen Maschine durch diese abnimmt. Zudem ist eine Wand des Gehäuses mit einer geringeren Wandstärke ausführbar, da aufgrund einer geringeren Presskraft die Wand nicht Gefahr läuft zu reißen.

In einer beispielhaften Ausführung kann eine ursprünglich 3,6 mm dicke Wand des Gehäuses unter Einbeziehung der genannten Erfindung mit einer Dicke von nur noch 2,5 mm gefertigt werden. Somit können elektrische Maschinen, die die erfindungsgemäße Rändelung des Stators aufweisen, in einer kompakten Bauweise bezüglich Höhe und Breite gefertigt werden.

Da dadurch auch weniger Material für das Gehäuse aufgewendet werden muss, können Kosten eingespart werden. Aufgrund einer guten Wärmeleitfähigkeit wird vorzugsweise Aluminium als Material für das Gehäuse verwendet.

Besonders gut eignet sich die Erfindung für Dreh-, Fräs- und Produktionsmaschinen mit einem Drehmoment von 1,2 Nm bis 50 Nm.

Die erfindungsgemäße Rändelung ermöglicht eine sichere Verbindung von Stator und Gehäuse, sodass auf eine Verwendung eines Klebstoffs verzichtet werden kann. Zudem kann mittels der Rändelung einer erforderlichen Entformungsschräge in einem Gussprozess entgegengewirkt werden, um eine ausreichende Pressverbindung zu erzielen.

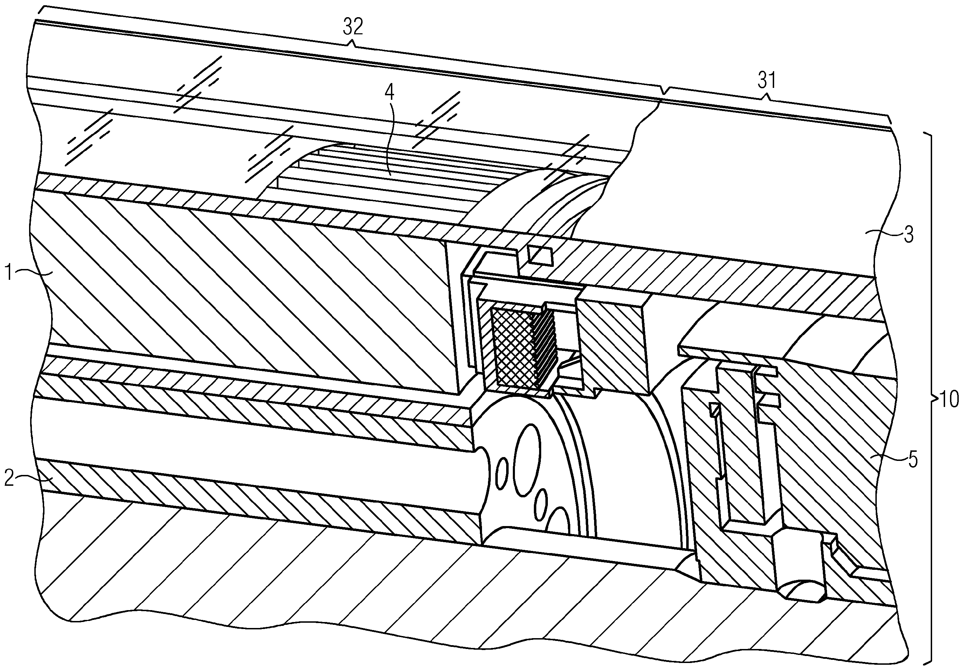

Die Erfindung wird anhand eines in der Figur dargestellten Querschnitts einer beispielhaften elektrischen Maschine erläutert.

Figur zeigt einen Querschnitt einer elektrischen Maschine 10, die einen Stator 1 und einen Rotor 2 umfasst. Im rechten Bereich 31 der elektrischen Maschine 10 ist ein Gehäuse 3 zu erkennen, welches im linken Bereich 32 der Figur durchaus vorhanden, aber transparent dargestellt ist. Aufgrund einer Transparenz des Gehäuses 3 kann eine als Rändelung 4 ausgeführte Gestaltabweichung zur Erhöhung eines Reibkoeffizienten zwischen Stator 1 und Gehäuse 3 auf dem Stator 1 erkannt werden.

Die Rändelung 4 nimmt eine Teilfläche einer Kontaktfläche zwischen Stator 1 und Gehäuse 3 ein und ist auf einer dem Gehäuse 3 zugewandten Oberfläche des Stators 1 ausgeführt. Die Figur zeigt, dass genau ein Teilbereich gerändelt ist. Die Rändelung 4 ist als Rändel mit achsparallelen Riefen ausgeführt und ermöglicht eine kraft- und formschlüssige Verbindung des Stators 1 mit dem Gehäuse 3.

Die Rändelung 4 ist an einem Ende - an einer sogenannten B-Seite der elektrischen Maschine - des Stators 1 ausgeführt, welches an einen Lagerschild 5 grenzt. Vorzugsweise beträgt die mit der Rändelung 4 versehene Teilfläche 10% bis 30% der gesamten Kontaktfläche zwischen Stator 1 und Gehäuse 3. Die Figur zeigt zudem, dass die Rändelung 4 ringsum den Stator 1 ausgeführt ist.

## Patentansprüche

1. Stator-Gehäuse-Einheit für eine elektrische Maschine (10), wobei ein Stator (1) mit einem Gehäuse (3) verbunden ist, **dadurch gekennzeichnet, dass** auf wenigstens einer Teilfläche einer Kontaktfläche zwischen dem Stator (1) und dem Gehäuse (3) eine Gestaltabweichung zur Erhöhung eines Reibkoeffizienten zwischen Stator (1) und Gehäuse (3) ausgeführt ist.

2. Stator-Gehäuse-Einheit nach Anspruch 1, wobei die Gestaltabweichung als eine Rändelung (4) ausgeführt ist.

3. Stator-Gehäuse-Einheit nach Anspruch 2, wobei die Rändelung (4) auf dem Stator (1) ausgeführt ist.

4. Stator-Gehäuse-Einheit nach einem der Ansprüche 2 oder 3, wobei die Rändelung als ein Rändel mit achsparallelen Riefen ausgeführt ist.

5. Stator-Gehäuse-Einheit nach einem der vorhergehenden Ansprüche, wobei der Stator (1) und das Gehäuse (3) formschlüssig miteinander verbunden sind.

6. Stator-Gehäuse-Einheit nach einem der vorhergehenden Ansprüche, wobei die Teilfläche an einem Ende des Stators (1) ausgeführt ist, der an einen Lagerschild (5) grenzt.

7. Stator-Gehäuse-Einheit nach einem der vorhergehenden Ansprüche, wobei genau eine Teilfläche an einem Ende des Stators (1) ausgeführt ist, der an einen Lagerschild (5) grenzt.

8. Stator-Gehäuse-Einheit nach einem der vorhergehenden Ansprüche, wobei die Teilfläche 10% bis 30% der Kontaktfläche beträgt und ringsum den Stator (1) ausgeführt ist.

9. Elektrische Maschine (10) mit einer Stator-Gehäuse-Einheit nach einem der Ansprüche 1 bis 8.

10. Elektrische Maschine (10) nach Anspruch 9 ausgebildet als Servomotor.

11. Verfahren zum Herstellen einer Stator-Gehäuse-Einheit für eine elektrische Maschine (10) nach einem der Ansprüche 1 bis 8, wobei ein Stator (1) mit einem Gehäuse (3) verbunden wird, **dadurch gekennzeichnet, dass** vor einem Verbinden wenigstens eine Teilfläche einer Kontaktfläche zwischen Stator (1) und Gehäuse (3) mit einer Gestaltabweichung zur Erhöhung eines Reibkoeffizienten zwischen Stator (1) und Gehäuse (3) versehen wird.
